# EUROPEAN PATENT APPLICATION

(11) **EP 4 794 402 A1**
(43) Date of publication of application: **19.08.2026**
(21) Application number: 26158725.7
(22) Date of filing: 16.02.2026
(51) Int. Cl.: H04W 52/02, B60L 3/12, B60L 53/66, H02J 7/80, H02J 7/44, B60L 53/62, B60L 53/16, B60L 53/30

(54) **ELECTRIC VEHICLE BATTERY CHARGING CONTROL DEVICE AND METHOD FOR SCHEDULED CHARGING**

(30) Priority: 17.02.2025 KR 20250019846
(71) Applicant: LG INNOTEK CO., LTD., Seoul 07796 (KR)
(72) Inventor: Shin, Kwangseob, 07796 Seoul (KR); Lee, Jongchang, 07796 Seoul (KR); Kim, Dohyeong, 07796 Seoul (KR)
(74) Representative: Plasseraud IP

(57) **Abstract**

An electric vehicle battery charging control device for scheduled charging according to the present invention includes: a communication unit for receiving scheduled charging time information; a first control unit for outputting a charging control signal for controlling the start of scheduled charging based on the received scheduled charging time information; and a second control unit for controlling charging of the electric vehicle battery based on the charging control signal, thereby providing an electric vehicle battery charging control device for scheduled charging. According to the electric vehicle charging control device for scheduled charging of the present invention, scheduled charging can be performed through the first control unit without a separate RTC circuit, and manufacturing cost of the electric vehicle charging control device can be reduced.

## Description

### TECHNICAL FIELD

The present invention relates to a battery charging control device for an electric vehicle for scheduled charging, and more particularly, to a charging control device capable of performing scheduled charging without using an RTC circuit.

### BACKGROUND

Advancements in battery technology, electrical and electronic technology, and communication technology have greatly improved the performance, efficiency, and user convenience of electric vehicles. Improvements in the energy density of lithium-ion batteries have increased battery capacity, and as a result, have significantly extended the driving range of electric vehicles.

In addition, research on charging high-voltage batteries of electric vehicles is ongoing. Standards related to electric vehicle charging, such as CHAdeMO, CCS, and GB/T, are being actively established, and protocols for scheduled charging to improve charging efficiency are also being enacted.

In the case of scheduled charging, scheduled charging can be carried out through a charging control signal acquired via a communication protocol or a charging control signal acquired upon reaching a scheduled time. Since an electric vehicle battery is charged using electricity, charging is often scheduled for late-night hours when electricity prices are relatively low, and charging is performed during such late-night hours, thereby increasing cost efficiency of charging.

In order to perform scheduled charging during late-night hours, the vehicle may operate in a sleep mode and wait to start charging until the time at which charging is scheduled. In this situation, an operation for entering a mode for starting charging from the sleep mode is referred to as "wakeup," and in order to determine whether to perform the wakeup, the charging control device should be equipped with an RTC circuit.

However, when an RTC circuit is mounted on a circuit board of the charging control device, restrictions arise in terms of manufacturing cost and the size of the circuit board during fabrication. Accordingly, there is a demand for a charging control device that is not equipped with an RTC circuit.

### [Prior Art Documents]

### [Patent Documents]

(Patent Document 0001) Korean Patent Registration No. 10-2570797 (Aug. 4, 2023)

### SUMMARY

### TECHNICAL PROBLEM

The present invention has been made in view of the above-described technical problem, and an object of the present invention is to provide an electric vehicle battery charging control device and method capable of performing scheduled charging without using an RTC circuit when scheduled charging of an electric vehicle battery is performed.

Another object of the present invention is to provide an electric vehicle battery charging control device and method capable of performing scheduled charging without using an RTC circuit, based on an execution time and the number of executions of an inspection with respect to a charging control signal.

### TECHNICAL SOLUTION

According to the present invention, an electric vehicle battery charging control device for scheduled charging may include: a communication unit configured to receive scheduled charging time information; a first control unit configured to output a charging control signal for controlling the start of scheduled charging based on the received scheduled charging time information; and a second control unit configured to control charging of the electric vehicle battery based on the charging control signal.

In addition, the communication unit may be a CAN receiver unit, the first control unit may be a wakeup unit, and the second control unit may be an MCU unit.

Further, the communication unit may be configured to perform CAN communication with a vehicle ECU within the electric vehicle.

In addition, the first control unit may be configured to receive a charging signal from an EVSE (Electric Vehicle Supply Equipment) external to the electric vehicle.

Further, the charging signal may be a CP signal, and the CP signal may include voltage information and duty information.

In addition, the first control unit may be configured to determine a charging stage based on the received charging signal.

Further, the first control unit may be configured to determine whether a scheduled time has been exceeded based on the number of times of the charging stage determination and a time required for the charging stage determination.

In addition, the first control unit may consume less power than the second control unit.

Further, the second control unit may be in a power-off state until receiving the charging control signal output from the first control unit.

According to the present invention, an electric vehicle battery charging control method for scheduled charging may include: receiving scheduled charging time information from a vehicle ECU of the electric vehicle; receiving a charging signal from an EVSE (Electric Vehicle Supply Equipment) and determining a charging stage based on the charging signal; determining whether a scheduled charging time has been exceeded based on the scheduled charging time information and the number of times of the charging stage determination; and outputting a charging control signal when it is determined that the scheduled charging time has been exceeded.

Further, the charging signal may be a CP signal, and the CP signal may include voltage information and duty information.

In addition, the step of determining whether the scheduled time has been exceeded may include determining whether a product of a time required for the charging stage determination and the number of times of the charging stage determination exceeds a value of the scheduled charging time information.

### EFFECT OF THE INVENTION

According to the electric vehicle battery charging control device and method of the present invention, scheduled charging of an electric vehicle battery can be performed without using an RTC circuit during scheduled charging of the electric vehicle battery. In addition, by using an electric vehicle charging control device that does not include an RTC circuit in its design, it is possible to reduce manufacturing cost and the size of a circuit board, and it is also possible to update the scheduled charging function later through, for example, an update of a software algorithm.

### BRIEF DESCRIPTION OF THE FIGURES

FIG. 1 is a conceptual diagram of an electric vehicle and an electric vehicle charging station.
FIG. 2 is a block diagram for describing a configuration of an electric vehicle battery charging system.
FIG. 3 is a diagram for describing an electric vehicle charging control device including an RTC circuit.
FIG. 4 is a diagram for describing an electric vehicle charging control device including a wakeup circuit for scheduled charging according to an embodiment of the present invention.
FIG. 5 is a diagram for describing an operation algorithm of the wakeup circuit according to an embodiment of the present invention.
FIG. 6 is a diagram for describing experimental results on a Control Pilot duty determination execution time shown in FIG. 5.
FIG. 7 is a diagram for describing an electric vehicle charging control method for scheduled charging according to an embodiment of the present invention.

### DETAILED DESCRIPTION

The following detailed description of the present invention refers to the accompanying drawings illustrating specific embodiments in which the present invention may be implemented. These embodiments are described in sufficient detail to enable a person skilled in the art to implement the present invention. It should be understood that various embodiments of the present invention may be different from one another, but need not be mutually exclusive. For example, specific shapes, structures, and characteristics described herein in connection with one embodiment may be implemented in other embodiments without departing from the spirit and scope of the present invention.

Terms including ordinal numbers such as "first" and "second" may be used to describe various components, but the components are not limited by such terms. These terms may be used for the purpose of distinguishing one component from another component. For example, a first component may be referred to as a second component, and conversely, a second component may be referred to as a first component.

In addition, it should be understood that positions or arrangements of individual components in each disclosed embodiment may be changed without departing from the spirit and scope of the present invention. Accordingly, the following detailed description is not intended to be taken in a limiting sense, and the scope of the present invention is limited only by the appended claims, along with all equivalents to what is claimed, provided that they are properly explained. Like reference numerals in the drawings refer to the same or similar functions throughout various aspects.

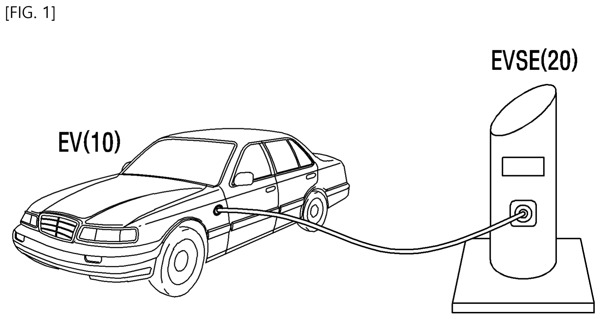

FIG. 1 is a conceptual diagram of an electric vehicle and an electric vehicle charging station. A charging system for an electric vehicle battery may operate by transmitting and receiving a charging control signal, charging control information, and power between electric vehicle supply equipment (EVSE) (20) and an electric vehicle (EV) (10).

As shown in FIG. 1, the EVSE may be located at a charging station. In addition, the EVSE may be located in a home or may be implemented to be portable. Further, the EVSE may be implemented within an electric vehicle (EV), and may be implemented to perform a function of charging another electric vehicle (EV) through the same.

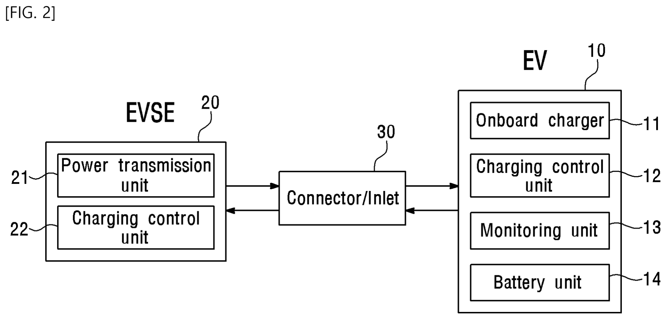

FIG. 2 is a block diagram for describing a configuration of an electric vehicle battery charging system. The electric vehicle battery charging system may include an EV (10), an EVSE (20), and a connector/inlet (30) connecting the EV (10) and the EVSE (20).

Referring to FIG. 2, the EV (10) may include an onboard charger (11), a charging control unit (12), a monitoring unit (13), and a battery unit (14).

When slow charging or AC charging of an electric vehicle is performed, the onboard charger (11) may convert power in order to deliver power received from the EVSE (20) to a high-voltage battery and thereby charge the battery. In addition, the onboard charger (11) may be implemented to perform voltage boosting, rectification, high-voltage cut-off, and CAN communication for slow charging or AC charging. It should also be understood that, even in the case of slow charging or AC charging, the onboard charger (11) may not be used depending on a charging control circuit within the EV (10).

The charging control unit (12) may communicate with an MCU (Micro Control Unit) inside the vehicle and the EVSE (20) to charge the battery of the electric vehicle, and may generate a charging control signal. Specifically, the MCU inside the vehicle may include configurations related to battery charging of an electric vehicle, such as a BMS (Battery Management System), a BMU (Battery Management Unit), a CMU (Cell Monitoring Unit), a BMIC (Battery Monitoring Integrated Circuit), a CMM (Cell Management Microcontroller), and a BCU (Battery Control Unit). The charging control unit (12) may receive a charging control signal delivered from the EVSE (20) and generate information and signals for controlling charging of the electric vehicle. The generated charging control signal for charging the electric vehicle battery may be transmitted to the MCU inside the vehicle to control a precise battery charging process.

The charging control unit (12) may include an electric vehicle charging controller (EVCC) and a vehicle ECU for controlling charging of the battery of the electric vehicle. Specifically, the charging control unit (12) may generate and deliver a control signal related to battery charging of the electric vehicle through communication (e.g., CAN communication) between the vehicle ECU and the EVCC of the electric vehicle. In addition, the charging control unit (12) may transmit and receive information for controlling charging, such as scheduled charging time information, based on communication with the vehicle ECU of the electric vehicle. For example, the vehicle ECU may transmit scheduled charging time information preset by a user to the EVCC, and the EVCC may generate a charging control signal to perform charging based on the received scheduled charging time information, and may control charging so that scheduled charging is performed based on the generated charging control signal.

In addition, the charging control unit (12) may control charging when a malfunction/error occurs during charging of the electric vehicle, based on communication between the EVSE (20) and the EV (10). For example, when the monitoring unit (13) detects occurrence of a malfunction/error before the start of scheduled charging or during charging, charging may be controlled to be stopped. In addition, for example, when a connector is unstably connected to an inlet of a PD port of the connector/inlet (30) or an error occurs in connection, control for safety of electric vehicle charging (e.g., stopping charging) may be performed.

The monitoring unit (13) may be implemented to perform overvoltage detection, current leakage detection, abnormal signal detection, circuit disconnection detection, and the like in battery charging of the electric vehicle. For example, the monitoring unit (13) may be configured to detect whether the EVSE (20) and the EV (10) are electrically connected for battery charging of the electric vehicle, and may detect whether the EV (10) is connected to ground for safety of battery charging of the electric vehicle.

The battery unit (14) may be implemented to store power received from the EVSE (20) in charging the battery of the electric vehicle. In addition, the battery unit (14) may be implemented to measure SOC (State Of Charge) information indicating a state of the stored power and to convert the power for use.

Referring to FIG. 2, the EVSE (20) may include a power transmission unit (21) and a charging control unit (22). The power transmission unit (21) may deliver power to the EV (10) based on a charging control signal and information. The charging control unit (22) may be implemented to transmit a signal for controlling charging through communication with the charging control unit (12) of the EV (10), or to start and stop charging. Communication between the charging control unit (22) of the EVSE (20) and the charging control unit (12) of the EV (10) may be based on protocols such as CCS (Combined Charging System), GB/T, and NACS, but is not limited thereto. For example, when communication is performed according to the CCS (Combined Charging System) protocol, charging control signals may be transmitted and received through PLC and PWM communication.

Referring to FIG. 2, the connector/inlet (30) may provide a connection for communication of power and charging control signals and information between the EVSE (20) and the EV (10). Specifically, it may include a power port, a ground port, a CP (Control Pilot) port, and a PD (Proximity Detection) port. The power port may deliver power transmitted from the EVSE (20) to the EV (10). The CP (Control Pilot) port may

transmit a signal for controlling charging, and may be configured to support PLC (Power Line Communication) communication, PWM (Pulse Width Modulation) communication, and/or a CAN (Controller Area Network) communication protocol. The PD port may be configured to detect whether a connector is connected to the inlet.

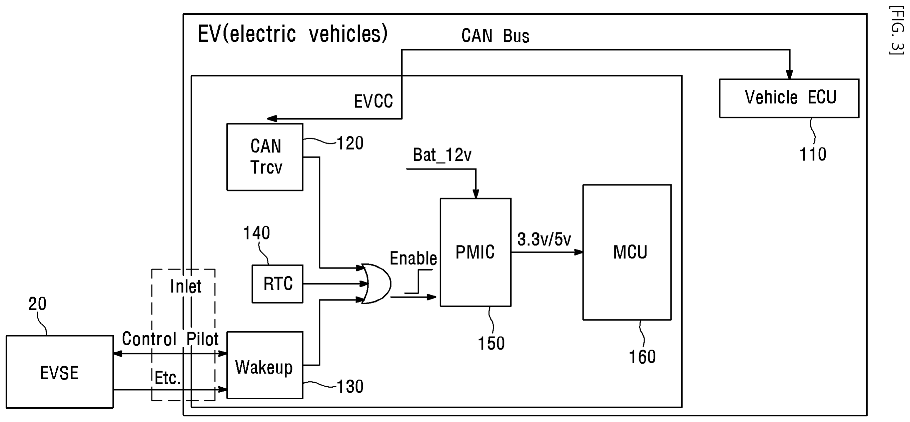

FIG. 3 is a diagram for describing an electric vehicle charging control device including an RTC circuit.

Referring to FIG. 3, a system for controlling battery charging of an electric vehicle according to an embodiment of the present invention may include an EVSE (20) and an EV (10). The EV (10) may include an EVCC (Electric Vehicle Charging Controller) (100) and a vehicle ECU (110). The EVCC (100) may communicate, through an inlet (30), a CP (Control Pilot) signal and signals or information related to charging with the EVSE (20). In addition, the EVCC (100) may receive scheduled charging time information from the vehicle ECU (110) in the EV (10), and may store and set a scheduled charging time based on the received scheduled charging time information.

The EVCC (100) including an RTC circuit according to an embodiment of the present invention may include: a CAN transceiver unit (CAN Trcv) (120) for CAN communication with the vehicle ECU (110); a wakeup unit (130) for switching the electric vehicle from a sleep mode for scheduled charging to a mode for performing scheduled charging; an RTC (Real Time Clock) unit (140) for managing whether a scheduled charging time has been reached; a PMIC (Power Management Integrated Circuit) unit (150) configured to apply voltage upon receiving an enable signal from the CAN Trcv unit (120) and the wakeup unit (130); and an MCU (Micro Control Unit) unit (160) configured to perform charging control in the EVCC (100).

The EVCC (100) including an RTC circuit according to an embodiment of the present invention may perform scheduled charging based on scheduled charging time information of the RTC circuit.

Specifically, information on a scheduled charging time preset in the vehicle ECU (110) of the EV (10) is transmitted to the CAN Trcv unit (120) of the EVCC (100) through CAN communication. Next, the EVCC (100) stores the received information on the scheduled charging time in at least one of the RTC unit (140) and the MCU unit (160). Thereafter, the RTC unit (140) detects whether the scheduled charging time has been reached, and when the scheduled charging time is reached by the RTC unit (140), an enable signal is applied to the PMIC unit (150) through the CAN Trcv unit (120) and the wakeup unit (130). When the enable signal is applied, the PMIC unit (150) converts an input voltage (e.g., 12 V) and applies the converted voltage (e.g., 3.3 V or 5 V) to the MCU unit (160). Thereafter, the MCU unit (160) may control charging to start scheduled charging based on the input signal.

However, referring to FIG. 3, when the RTC unit (140) is mounted in the EVCC (100), since the RTC circuit should be connected to the wakeup unit (130) and the CAN Trcv unit (120), design complexity increases and manufacturing cost increases.

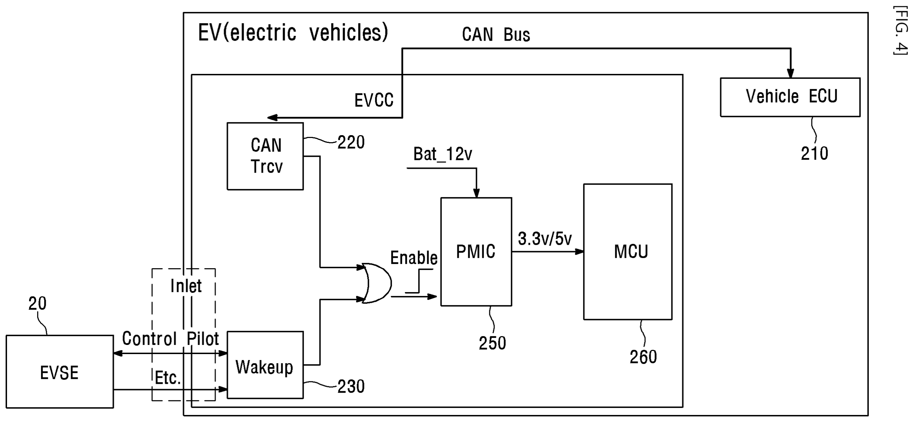

Hereinafter, with reference to FIG. 4, an electric vehicle charging control device and method capable of performing scheduled charging according to a scheduled charging time without including an RTC circuit according to the present invention will be described.

FIG. 4 is a diagram for describing an electric vehicle charging control device including a wakeup circuit for scheduled charging according to an embodiment of the present invention.

A system for controlling battery charging of an electric vehicle according to an embodiment of the present invention may include an EVSE (20) and an EV (10). The EV (10) may include an EVCC (Electric Vehicle Charging Controller) (200) including a wakeup circuit and a vehicle ECU (210). The EVCC (200) may communicate, through an inlet (30), a CP (Control Pilot) signal and signals or information related to charging with the EVSE (20). In addition, the EVCC (200) may receive scheduled charging time information from the vehicle ECU (210) in the EV (10), and may store and set a scheduled charging time based on the received scheduled charging time information.

In addition, the EVCC (200) may communicate a charging signal (e.g., a CP signal and a PWM signal) with the EVSE (20) through the inlet, and may receive information related to charging from the EVSE.

The EVCC (200) according to an embodiment of the present invention may include: a CAN transceiver unit (CAN Trcv) (220) for CAN communication with the vehicle ECU (210); a wakeup unit (230) for switching the electric vehicle from a sleep mode for scheduled charging to a mode for performing scheduled charging; a PMIC (Power Management Integrated Circuit) unit (250) configured to apply voltage upon receiving an enable signal from the CAN Trcv unit (220) and the wakeup unit (230); and an MCU (Micro Control Unit) unit (260) configured to perform charging control in the EVCC (200).

The EVCC (200) according to an embodiment of the present invention may not include an RTC circuit for checking a scheduled charging time.

The CAN transceiver unit (CAN Trcv) (220) according to an embodiment of the present invention is responsible for CAN communication with the vehicle ECU (210), and enables communication between the EVCC (200) and the vehicle ECU (210). The CAN transceiver unit (CAN Trcv) (220) operates based on a CAN (Controller Area Network) protocol, and may transmit and receive a charging state, battery management system (BMS) information, and charging-related signals in the vehicle. In addition, the CAN transceiver unit (CAN Trcv) (220) may receive scheduled charging time information from the vehicle ECU (210) and communicate such that the EVCC (200) can set a scheduled charging time.

The wakeup unit (230) according to an embodiment of the present invention may detect that the EV (10) is connected to a cable through the inlet, and may perform communication with the EVSE (20).

Specifically, the EVCC (200) may periodically monitor whether a charging enable signal (e.g., a CP signal or a PWM signal) is received through the inlet in a sleep mode state, and may monitor whether a wakeup condition is satisfied. When the charging enable signal is received or when the wakeup condition is satisfied, an enable signal may be applied to the PMIC unit (250).

The wakeup unit according to an embodiment of the present invention may cause the vehicle to enter a low-power standby mode in order to prevent unnecessary power consumption in a standby state in which the vehicle is not being charged.

When an enable signal is applied, the PMIC unit (250) according to an embodiment of the present invention converts an input voltage (e.g., 12 V) and applies the converted voltage (e.g., 3.3 V or 5 V) to the MCU unit (260). Thereafter, the MCU unit (260) may control charging to start scheduled charging based on the input signal.

In addition, the wakeup unit (230) according to an embodiment of the present invention may be a low-power microcontroller, and the MCU unit (260) may be configured as a high-performance controller. In this case, in a sleep mode waiting for scheduled charging, power is not supplied to the MCU unit (260), and power is supplied only to the wakeup unit configured as a low-power microcontroller, thereby reducing current and power consumption of the EVCC (200) in the sleep mode.

In addition, by checking a scheduled time in the wakeup unit (230) using a regular software execution time without using a separate RTC circuit, it is possible to reduce design, manufacturing, and operating costs due to the use of the RTC circuit. Further, by checking the scheduled time based on a software algorithm, there is an advantage in that the function of checking the scheduled time may be changed or supplemented later through a software update.

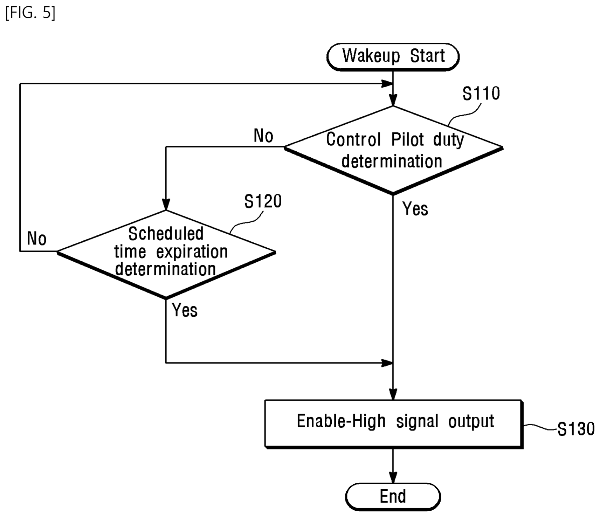

FIG. 5 is a diagram for describing an operation algorithm of a wakeup circuit according to an embodiment of the present invention.

The algorithm shown in FIG. 5 is an algorithm for monitoring whether a wakeup condition of the wakeup unit (230) shown in FIG. 4 is satisfied.

Specifically, a wakeup condition monitoring algorithm according to an embodiment of the present invention may include a Control Pilot duty determination step (S110), a scheduled time expiration determination step (S120), and an enable-high signal output step (S130).

The Control Pilot duty determination step (S110) according to an embodiment of the present invention determines whether a received CP (Control Pilot) signal falls within a section corresponding to a wakeup condition. For example, when the CP (Control Pilot) signal is a PWM signal, it may be determined whether the duty and the voltage of the PWM signal correspond to a wakeup section.

As a more specific example, whether the duty and the voltage of the PWM signal correspond to a wakeup section may be determined based on whether the CP signal corresponds to a wakeup section according to at least one of CCS, CHAdeMO, and GB/T standards. However, it should be understood that the present invention is not limited to the above-described standards for the wakeup section.

When it is determined in the Control Pilot duty determination step (S110) according to an embodiment of the present invention that the signal corresponds to the wakeup section, the enable-high signal output step (S130) may be executed, and the enable-high signal may be applied to the PMIC unit (250).

On the other hand, when it is determined in the Control Pilot duty determination step (S110) according to an embodiment of the present invention that the signal does not correspond to the wakeup section, the scheduled time expiration determination step (S120) may be executed.

The scheduled time expiration determination step (S120) according to an embodiment of the present invention may determine whether the scheduled time has been exceeded. Specifically, by multiplying the number of executions of the Control Pilot duty determination step (S110) by a time required to perform the Control Pilot duty determination step (S110), it may be determined whether the scheduled time has been exceeded. More specifically, when a value obtained by multiplying the number of executions of the Control Pilot duty determination step (S110) by the required time exceeds a scheduled time received from the vehicle ECU (210), the enable-high signal output step (S130) may be executed to apply the enable-high signal to the PMIC unit (250). When the value obtained by multiplying the number of executions of the Control Pilot duty determination step (S110) by the required time does not exceed the scheduled time received from the vehicle ECU (210), the Control Pilot duty determination step (S110) may be executed again.

The enable-high signal output step (S130) according to an embodiment of the present invention operates the MCU unit (260) of the EVCC (200) through the PMIC unit (250), and the vehicle ECU (210) and the EVCC (200) perform scheduled charging based on CAN communication.

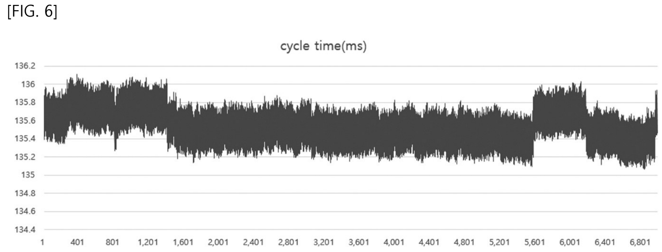

FIG. 6 is a diagram for describing experimental results regarding the execution time of the Control Pilot duty determination shown in FIG. 5.

Referring to FIG. 6, experimental results regarding the time required per execution of the Control Pilot duty determination step (S110) according to an embodiment of the present invention can be confirmed. As shown in FIG. 6, the time required per execution of the Control Pilot duty determination step (S110) according to an embodiment of the present invention can be confirmed to be approximately 135 ms. In addition, an error rate of the per-execution required time according to the experimental results is within 5%. Therefore, in the case of performing nighttime scheduled charging, considering a time required for charging, charging can be started at a desired time even without an RTC circuit.

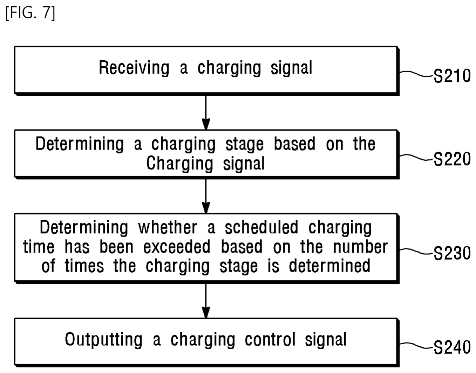

FIG. 7 is a diagram for describing an electric vehicle charging control method for scheduled charging according to an embodiment of the present invention.

An electric vehicle charging control method for scheduled charging according to an embodiment of the present invention may include receiving a charging signal (S210), determining a charging stage based on the charging signal (S220), determining whether a scheduled charging time has been exceeded based on the number of times the charging stage is determined (S230), and outputting a charging control signal (S240).

The receiving of the charging signal (S210) according to an embodiment of the present invention is a step of receiving a charging signal from the EVSE (20) to the EVCC (200) of the EV (10) through the inlet. Specifically, the EVCC (200) may receive, through the inlet, a charging signal related to a charging state for battery charging of an electric vehicle according to a charging protocol (e.g., a standard protocol such as CCS, CHAdeMO, and GB/T) from the EVSE (20). For example, a CP signal configured as a PWM signal may be received, and the CP signal may be configured as information including a voltage value and a duty.

The determining of the charging stage based on the charging signal (S220) according to an embodiment of the present invention may be a step of determining whether the received charging signal is a charging signal instructing wakeup from a sleep mode. For example, when the received CP signal is a signal corresponding to the sleep mode, it may be determined not to start charging, and when the received signal is a signal instructing wakeup from the sleep mode, it may be determined as a stage for performing charging.

The determining of whether the scheduled charging time has been exceeded based on the number of times the charging stage is determined (S230) according to an embodiment of the present invention may determine whether the scheduled charging time has been exceeded based on the number of times the step (S220) of determining the charging stage based on the above-described charging signal has been performed. Specifically, it may be determined whether a value obtained by multiplying a time required for the step (S220) of determining the charging stage by the number of times exceeds a scheduled charging time.

Next, the outputting of the charging control signal (S240) according to an embodiment of the present invention may output a charging control signal (e.g., an enable-high signal) to the MCU unit (260) in the EVCC (200) when the charging signal is a signal instructing charging start or when it is determined, based on the number of times the charging stage is determined, that the scheduled charging time has been exceeded.

While the above detailed description of the invention has been described with reference to preferred embodiments of the present invention, it should be understood by those skilled in the art that various modifications and changes may be made to the present invention without departing from the spirit and scope of the present invention as set forth in the appended claims.

### Description of Reference Numerals

10: EV
11: Onboard charger
12: Charging control unit
13: Monitoring unit
14: Battery unit
20: EVSE
21: Power transmission unit
22: Charging control unit
30: Connector/Inlet
100, 200: EVCC
110, 210: Vehicle ECU
120, 220: CAN Trcv unit
130, 230: Wakeup unit
140: RTC unit
150, 250: PMIC unit
160, 260: MCU unit

## Claims

1. An electric vehicle battery charging control device for scheduled charging, comprising:
a communication unit for receiving scheduled charging time information;
a first control unit for outputting a charging control signal for controlling the start of scheduled charging based on the received scheduled charging time information; and
a second control unit for controlling charging of the electric vehicle battery based on the charging control signal.

2. The device of claim 1, wherein the communication unit is configured to perform CAN communication with a vehicle ECU in the electric vehicle.

3. The device of claim 1, wherein the first control unit is configured to receive a charging signal from EVSE (Electric Vehicle Supply Equipment) external to the electric vehicle.

4. The device of claim 3, wherein the charging signal is a CP signal, and the CP signal includes voltage information and duty information.

5. The device of claim 1, wherein the first control unit is configured to perform a charging stage determination based on the received charging signal.

6. The device of claim 4, wherein the first control unit is configured to determine whether a scheduled time has been exceeded based on the number of times of the charging stage determination and a time required for the charging stage determination.

7. The device of claim 1, wherein the first control unit consumes less power than the second control unit.

8. The device of claim 1, wherein the second control unit is in a power-off state until receiving the charging control signal output from the first control unit.

9. An electric vehicle battery charging control method for scheduled charging, comprising: receiving scheduled charging time information from a vehicle ECU of the electric vehicle;
receiving a charging signal from EVSE (Electric Vehicle Supply Equipment) and determining a charging stage based on the charging signal;
determining whether a scheduled charging time has been exceeded based on the scheduled charging time information and the number of times of the charging stage determination; and
outputting a charging control signal when it is determined that the scheduled charging time has been exceeded.

10. The method of claim 9, wherein the charging signal is a CP signal, and the CP signal includes voltage information and duty information.

11. The method of claim 9, wherein the determining whether the scheduled time has been exceeded comprises:
determining whether a product of a time required for the charging stage determination and the number of times of the charging stage determination exceeds a value of the scheduled charging time information.
